(19) Europäisches Patentamt
European Patent Office
Office européen des brevets

(11) **EP 3 977 358 B1**

(12) **EUROPEAN PATENT SPECIFICATION**

(45) Date of publication and mention
of the grant of the patent:
**24.12.2025 Bulletin 2025/52**

(21) Application number: **20727750.0**

(22) Date of filing: **27.04.2020**

(51) International Patent Classification (IPC):
**G06F 21/53** (2013.01)     **G06N 3/0464** (2023.01)
**G06N 3/063** (2023.01)

(52) Cooperative Patent Classification (CPC):
**G06F 21/53; G06N 3/0464;** G06N 3/063

(86) International application number:
**PCT/US2020/030018**

(87) International publication number:
**WO 2020/242689 (03.12.2020 Gazette 2020/49)**

(54) **EXECUTION OF DEEP-LEARNING MODEL**

AUSFÜHRUNG EINES TIEFENLERNMODELLS

EXÉCUTION D'UN MODÈLE D'APPRENTISSAGE PROFOND

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019   CN 201910475938**

(43) Date of publication of application:
**06.04.2022   Bulletin 2022/14**

(73) Proprietor: **Microsoft Technology Licensing, LLC
Redmond, WA 98052-6399 (US)**

(72) Inventors:
• **LIU, Yunxin
Redmond, Washington 98052-6399 (US)**
• **ZHANG, Lintao
Redmond, Washington 98052-6399 (US)**

(74) Representative: **Grünecker Patent- und
Rechtsanwälte
PartG mbB
Leopoldstraße 4
80802 München (DE)**

(56) References cited:
• **ZHONGSHU GU ET AL: "Securing Input Data of
Deep Learning Inference Systems via Partitioned
Enclave Execution", ARXIV.ORG, CORNELL
UNIVERSITY LIBRARY, 201 OLIN LIBRARY
CORNELL UNIVERSITY ITHACA, NY 14853, 3
July 2018 (2018-07-03), XP081110324**
• **ANDREW ANDERSON ET AL: "Low-memory
GEMM-based convolution algorithms for deep
neural networks", ARXIV.ORG, CORNELL
UNIVERSITY LIBRARY, 201 OLIN LIBRARY
CORNELL UNIVERSITY ITHACA, NY 14853, 8
September 2017 (2017-09-08), XP080820094**
• **MINSIK CHO ET AL: "MEC: Memory-efficient
Convolution for Deep Neural Network",
ARXIV.ORG, CORNELL UNIVERSITY LIBRARY,
201 OLIN LIBRARY CORNELL UNIVERSITY
ITHACA, NY 14853, 21 June 2017 (2017-06-21),
XP080771512**
• **LI LING ET AL: "Memory Saving Method for
Enhanced Convolution of Deep Neural Network",
2018 11TH INTERNATIONAL SYMPOSIUM ON
COMPUTATIONAL INTELLIGENCE AND DESIGN
(ISCID), IEEE, vol. 1, 8 December 2018
(2018-12-08), pages 185 - 188, XP033540874, DOI:
10.1109/ISCID.2018.00049**

- ROLAND KUNKEL ET AL: "TensorSCONE: A Secure TensorFlow Framework using Intel SGX", ARXIV.ORG, CORNELL UNIVERSITY LIBRARY, 201 OLIN LIBRARY CORNELL UNIVERSITY ITHACA, NY 14853, 12 February 2019 (2019-02-12), XP081028200
- SHRUTI TOPLE ET AL: "Privado: Practical and Secure DNN Inference", ARXIV.ORG, CORNELL UNIVERSITY LIBRARY, 201 OLIN LIBRARY CORNELL UNIVERSITY ITHACA, NY 14853, 1 October 2018 (2018-10-01), XP080928575
- FLORIAN TRAM\'ER ET AL: "Slalom: Fast, Verifiable and Private Execution of Neural Networks in Trusted Hardware", ARXIV.ORG, CORNELL UNIVERSITY LIBRARY, 201 OLIN LIBRARY CORNELL UNIVERSITY ITHACA, NY 14853, 8 June 2018 (2018-06-08), XP081021624

**Description**

**BACKGROUND**

Deep learning, as a branch of machine learning, has had breakthroughs in recent years and is now widely used in a variety of fields and implementations. Deep learning models can be designed to implement various tasks, including computer visual processing, speech recognition, natural language processing, and so on. Those tasks may sometimes be performed in various terminals such as mobile phones and Internet of Things (IoT) applications. Execution of a deep learning model, especially of a large-scale model with a complicated or sophisticated configuration, imposes high requirements on computing resources and memory resources. Gu et al. ("Securing Input Data of Deep Learning Inference Systems via Partitioned Enclave Execution," arXiv:1807.00969v1, 3 July 2018) describe a system for executing deep learning inference within a trusted execution environment using matrix-multiplication-based convolution and sequential input chunking to manage enclave memory constraints. Anderson et al. ("Low-Memory GEMM-Based Convolution Algorithms for Deep Neural Networks," arXiv:1709.03395, 8 September 2017) present methods for reducing memory usage during convolution operations in conventional computing environments by optimizing matrix-multiplication-based implementations, without addressing secure or enclave-based execution.

**SUMMARY**

In accordance with implementations of the subject matter described herein, there is provided a solution for execution of a deep learning model. In the solution, which is set out in the appended set of claims, in response to a convolution in a convolutional layer of a deep learning model being triggered, executing, based on an input and a set of parameter values of the convolutional layer, partitioned convolutions sequentially in a trusted execution environment (TEE) of a computing device. The execution of a given one of the plurality of partitioned convolutions comprises: storing, into a protected memory area in the TEE, an input portion of the input to be processed by a subset of parameter values for the given partitioned convolution, where the input portion is represented as a matrix; determining a result of the given partitioned convolution through a single matrix multiplication operation on the input portion and the subset of parameter values for the given partitioned convolution, the subset of parameter values being represented as a matrix; and removing the input portion from the protected memory area. By combining results of the plurality of partitioned convolutions, a result of the convolution is determined as an output of the convolutional layer. As such, the execution speed of a model can be accelerated and the storage efficiency can be improved in a highly safe TEE with limited memory resources.

The Summary is to introduce a selection of concepts in a simplified form that are further described below in the Detailed Description. The Summary is not intended to identify key features or essential features of the subject matter described herein, nor is it intended to be used to limit the scope of the subject matter described herein.

**BRIEF DESCRIPTION OF THE DRAWINGS**

Fig. 1 is a block diagram illustrating an environment in which a plurality of implementations of the subject matter described herein can be implemented;

Fig. 2 is a block diagram illustrating a computer environment implemented in a computing device in accordance with an implementation of the subject matter described herein;

Fig. 3A illustrates an example of a direct convolution in a convolutional layer;

Fig. 3B illustrates an example of convolution lowering-based fast convolution;

Fig. 4 illustrates an example of fast convolution based on partitioned convolutions in accordance with an implementation of the subject matter described herein;

Fig. 5 is a block diagram of a calculating environment implemented in a computing device in accordance with another implementation of the subject matter described herein;

Fig. 6 illustrates an example of a parallel pipeline thread of parameter loading, parameter check, and model execution in accordance with an implementation of the subject matter described herein; and

Fig. 7 is a flowchart illustrating a process in accordance with an implementation of the subject matter described herein.

Throughout the drawings, the same or similar reference symbols refer to the same or similar elements.

**DETAILED DESCRIPTION OF EMBODIMENTS**

The subject matter described herein will now be described with reference to several example implementations. It should be understood that these implementations are discussed only for the purpose of enabling those skilled in the art to better understand and thus implement the subject matter described herein, rather than suggesting any limitation on the scope of the subject matter.

As used herein, the term "includes" and its variants are to be read as open-ended terms that mean "includes, but is not limited to." The term "based on" is to be read as "based at least in part on." The terms "an implementation" and "one implementation" are to be read as "at least one implementation." The term "another implementation" is to be read as "at least one other implementation." The term "first," "second" or the like may represent different or the same objects. Other definitions, either explicit or implicit, may be included below.

Machine learning is an artificial intelligence technology. Deep learning is a type of machine learning algorithm in which a multi-layer processing unit is employed to process inputs and provide respective outputs. The deep learning algorithm may be implemented by a multi-layer neural network (NN). Such a multi-layer neural network is also referred to as a "deep learning model" or a "machine learning model." The term "deep learning model," "machine learning model," "learning network," "neural network," "model" and "network" are used herein interchangeably.

In general, a neural network includes an input layer and an output layer, as well as one or more hidden layers therebetween. A neural network used in a deep learning application typically includes a plurality of hidden layers for extending the depth of the network. Respective layers in a neural network are connected sequentially such that an output of a previous layer is provided as an input of the subsequent layer, where the input layer receives an input of the neural network while the output of the output layer is taken as the final output of the neural network. Each layer of the neural network includes one or more nodes (which are also referred to as processing nodes or neurons), each of which processes an input from the previous layer. A convolutional neural network (CNN) is one type of neural network, including one or more convolutional layers for executing convolutions on respective inputs. The CNN may be applied in various scenarios, in particular suitable for processing images or video data.

As aforementioned, deep learning has already been widely used in a variety of tasks which, for example, may include computer visual processing, speech recognition, natural language process and so on. Tasks of some mobile or Internet of Things (IoT) applications have been implemented by the deep learning algorithm. However, either during training of a deep learning model or in the subsequent utilization phase, execution of the deep learning model expends a large amount of calculating and storage resources.

A possible solution is to transfer the execution of a deep learning model from a device with limited calculating and/or storage resources (e.g., a mobile device or an IoT device) to other devices with more resources, such as a cloud computing device, an edge server, a large-scale calculating system, and the like. The execution result may be sent back to the respective device for use. However, it is required to transmit, to a device for the execution of the deep learning model, the inputs of the deep learning model, such as images, voices, text information, or the like, and these data may be user-sensitive or private. Transferring user data from local devices to other calculating environments involves a problem of user privacy. A public environment, such as a cloud computing environment or the like, is difficult to trust, due to the frequent occurrence of malicious external attacks and untrusted internal administration.

A solution for protecting user privacy is to execute deep learning models on users' local devices. In order to execute deep learning models using limited calculating and/or storage resources of the local devices, it is normally required to compress large-scale deep learning models into small ones and design new lightweight (small-scale parameter sets) models. This solution prevents user data from leaving the local devices, thereby significantly reducing the possibility of a privacy leak. However, there are some drawbacks in this local execution solution. First, the compressed and lightweight models have difficulty achieving the same accuracy as the large-scale deep learning models due to the fundamental trade-off between model size and model accuracy. Second, even though it is feasible to run the models that have been re-designed on the local devices, there may be high latency for the execution of the models due to the constraints of the calculating and/or storage resources, which impacts user experience. Furthermore, local execution will also incur high energy consumption, thereby impacting the lifetime of battery-operated devices.

As can be seen, the solution of transferring execution of a deep learning model to an external device with a high calculating capability, for example, a cloud computing device, is more efficient, but the possible problem about user data safety existing in the solution should be solved or eased.

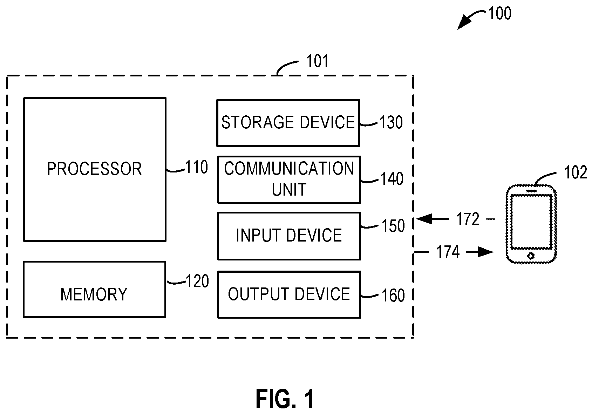

Fig. 1 is a block diagram illustrating a calculating system 100 that can implement a plurality of implementations of the subject matter described herein. The calculating system 100 involves a computing device 101 and a device 102. The computing device 101 is configured to execute, in response to a request from the device 102, a respective task for the device 102. Fig. 1 shows the structure of the computing device 101 in detail. As shown, the computing device 101 includes a computing device 101 in the form of a general computing device. Components of the computing device 101 may include, but are not limited to, one or more processors or processing units 110, a memory 120, a storage device 130, one or more communication units 140, one or more input devices 150 and one or more output devices 160. It should be appreciated that the computing device 101 described in Fig. 1 is merely for the purpose of illustration, rather than suggesting any limitation on the function and scope of implementations of the subject matter described herein in any manner.

In some implementations, the computing device 101 may be implemented as various terminals or devices having a calculating capability. For example, the computing device 101 may be a cloud-computing device, an edge server, a large-scale calculating system, or the like. The computing device 101 may also be other devices having a calculating capability, or even may be, for example, a mobile terminal, a fixed terminal, a portable terminal, or the like.

The processor 110 may be a physical or virtual processor, and can perform various processing based on programs stored in the memory 120. In a multi-processor system, multiple processors execute computer-executable instructions in parallel to increase parallel processing power for the computing device 101. The processor 110 can also be referred to as a central processing unit (CPU), a microprocessor, a controller, or a microcontroller.

The computing device 101 typically includes a plurality of computer storage mediums, which may be any available medium accessible by the computing device 101, including, but not limited to, volatile and non-volatile medium, and removable and non-removable medium. The memory 120 may be a volatile memory (e.g., a register, a cache, a random access memory (RAM)), a non-volatile memory (e.g., a read-only memory (ROM), electrically erasable programmable read-only memory (EEPROM), a flash memory), or some combination thereof. The storage device 130 may be any removable or non-removable medium, and may include machine-readable medium, such as a memory, a flash drive, a disk or any other medium that can be used to store information and/or data and be accessed in the computing device 101.

The computing device 101 may further include an additional removable/non-removable, a volatile/non-volatile memory medium. Although not shown in Fig. 1, a disk drive may be provided for reading and writing a removable and non-volatile disk and a disc drive can be provided for reading and writing a removable non-volatile disc. In these cases, each drive may be connected to a bus (not shown) via one or more data medium interfaces.

The communication unit 140 enables communication over a communication medium with another computing device. Additionally, functionalities of the components of the computing device 101 may be implemented in a single calculating cluster or multiple calculating machines that are able to communicate over communication connections. Thus, the computing device 101 may operate in a networked environment using local connections to one or more other servers, network personal computers (PCs) or another general network node.

The input device(s) 150 may include one or more of various input devices, such as a mouse, a keyboard, a tracking ball, a voice-input device, and the like. The output device 160 may include one or more output devices, such as a display, a loudspeaker, a printer, and the like. As required, the computing device 101 may also communicate via the communication unit 140 with one or more external devices (not shown) such as a storage device, display device and the like, one or more devices that enable users to interact with the computing device 101, or any devices that enable the computing device 101 to communicate with one or more other computing devices (e.g., a network card, a modem, and the like). Such communication may be performed via an input/output (I/O) interface (not shown).

In some implementations, in addition to being integrated on a single device, some or all components in the computing device 101 may be provided in the form of cloud computing architecture. In the cloud computing architecture, these components may be arranged remotely, and may operate together to implement the functionalities described herein. In some implementations, the cloud computing provides computing, software, data access and storage services, without the necessity of letting terminal users know the physical location or configuration of the system or hardware that provides these services. In various implementations, the cloud computing provides services via a wide area network (e.g., Internet) using an appropriate protocol. For example, a cloud computing provider provides applications via a wide area network, and they are accessible via a web browser or any other calculating component. Software or components and respective data of the cloud computing architecture may be stored on a server at a remote location. Computing resources in a cloud computing environment may be merged at a remote data center location or may be dispersed. Cloud computing infrastructures may provide services through a shared data center even though they are presented as a single access point for users. Hence, the cloud computing architecture can be used to provide components and functionalities as described herein from the service provider at the remote location. Alternatively, they may be provided from regular servers, or they may be mounted on a client device directly or in other manners.

The computing device 101 can be used to implement execution of a deep learning model in a plurality of implementations of the subject matter described herein. Model execution in the computing device 101 may be started, responsive to a request from the device 102. During execution of a deep learning model, the computing device 101 may obtain an input 172 of the deep learning model from a further device 102. For example, the computing device 101 may receive the input 172 from the device 102 via the communication unit 140. The device 102 may be a user terminal, for example, for providing the input 172 to the computing device 101, responsive to a user's operation. The computing device 101 stores therein a deep learning model to be executed, and the computing device 101 is configured to cause the deep learning model to process the input 172 and thus generate an output 174 of the deep learning model. The output 174 may be provided to the device 102, for example, via the communication unit 140.

Implementations of the subject matter described herein propose a solution for execution of a deep learning model. The solution includes executing a deep learning model in a trusted execution environment (TEE) of a computing device, in particular a convolution in a convolutional layer of a deep learning model. A brief introduction on the TEE is given before description of the implementations of the subject matter described herein.

TEE is a hardware-protected safe execution environment, which is also referred to as hardware-protected enclave or safe enclave. TEE may implement isolated execution from other parts of the computing device. Code execution in a TEE can gain high-level protection, for ensuring protection for confidentiality and integrity of code and data in the TEE when the operating system, the hypervisor, the basic input/output system (BIOS), and the like, are infected with a virus, or suffer from malicious attacks. TEE can also defend hardware against attacks, for example, memory probes or the like. As a result, even the malicious administrator of the computing device has no access to the code and data in the TEE. In some implementations, a TEE further provides remote attestation for a third party to verify the code and data loaded into the TEE.

A TEE may be implemented in a processor of a computing device and protected by the hardware protection mechanism of the processor, and the code and data therein may be executed and stored by a specified trusted memory area in the processor. Data, information, and the like, exchanged between the TEE and external components or devices thereof are all encrypted, so as to ensure data security. The TEE may be implemented by, for example, a software guard eXtension (SGX) technique. Other implementations of the TEE, for example, may be a secure virtual machine, a cloud security engine (CSE), or the like.

As can be seen above, the TEE can be used in applications needing protection against privacy leak. However, through research, the inventors noticed that, if a deep learning model was directly executed in the TEE, some performance deficiencies might be brought about. For example, the execution speed of the deep learning model implemented in TEE is several times (e.g., 6.4 times) slower than the execution speed in a standard calculating environment outside the TEE. The inventors have found out two factors causing the performance degradation.

On one hand, memory read and write inside the TEE is slower than the standard execution outside the TEE. However, execution of a deep learning model requires a large volume of memory read and write operations. The slowdown of the memory operation occurs because the TEE maintains a special protected memory area which is also referred to as processor reserved memory (PRM). All the data in the protected memory area are encrypted through a dedicated chipset, which adds extra data encryption and decryption upon every access to the memory.

On the other hand, the protected memory area is often limited, which is difficult to extend during operation, according to needs. For example, in the Intel Skylake CPU, the protected memory area is 128 MB. As such, the storage size is far less than the size of many deep learning models. For example, some large-scale deep learning models may require storage greater than 1 GB, and even some shallow deep learning models may require storage greater than 200 MB. Although the TEE may meet the requirement of a storage being greater than the protected memory area, for example, through paging technique, but this may further slow the execution speed because the paging technique involves frequently swapping data from the protected memory area to the unprotected memory area, or vice versa, which results in additional data encryption and description. Although an increase in the protected memory area of the TEE is theoretically possible, the size of the protected memory area is a carefully engineered value set in BIOS and cannot be modified. Moreover, the increased protected memory area of the TEE will reduce the storage in the computing device available for other standard applications that do not require memory protection.

Considering the constraints of the storage and memory access, the inventors realized that the convolution in a deep learning model needs further improvements when the deep learning model is executed in a TEE. Hence, in accordance with some implementations of the subject matter described herein, there is provided an improved solution for execution of a deep learning model. Specifically, in accordance with the solution, the convolution is divided into a plurality of partitioned convolutions which are executed sequentially in the TEE. For each partitioned convolution, an input portion in the form of matrix processed by the partitioned convolution is determined as the input of the convolutional layer. The input portion is stored in the protected memory area of the TEE. Through a single matrix multiplication operation on the input portion and a subset of parameter values for the input portion in a set of parameter values for the convolution, a result of the partitioned convolution is determined. By combining results of the plurality of partitioned convolutions, the result of the convolution is obtained as the output of the convolutional layer.

By executing a deep learning model in a TEE, the solution can enhance data protection and prevent user privacy leak. In this case, a deep learning model can be executed on an external computing device with a powerful calculating capability, and thus achieve high accuracy of model execution at low latency when protecting user privacy. Moreover, by dividing a convolution into a plurality of partitioned convolutions to be executed sequentially, the solution can further fit model execution in a TEE with a limited storage, to achieve a tradeoff between the calculating speed and the storage consumption.

Basic principles and several example implementations will be described below with reference to the accompanying drawings.

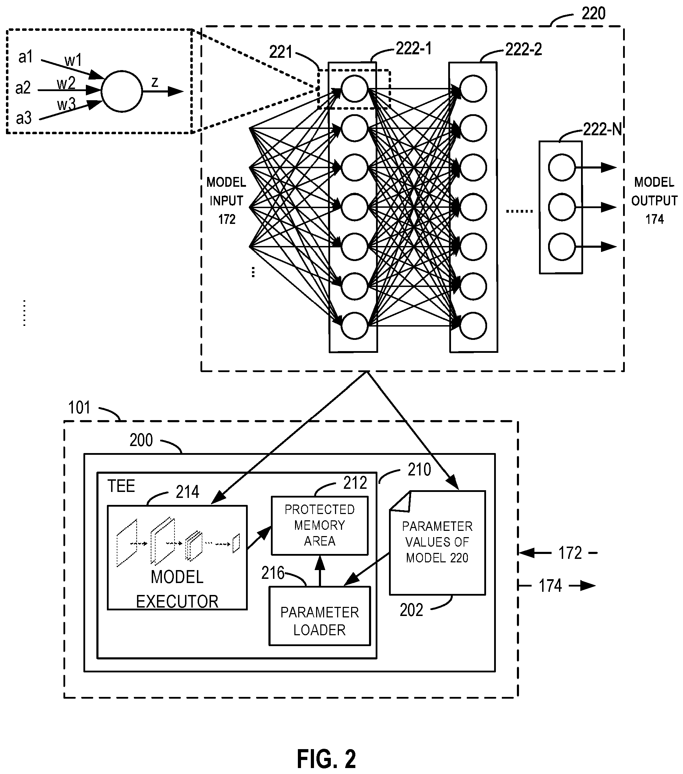

Fig. 2 is a schematic block diagram of a calculating environment that is implemented in a computing device in accordance with some implementations of the subject matter described herein. For the purpose of illustration, the calculating environment implemented in the computing device 101 of Fig. 1 is taken as an example. In accordance with implementations of the subject matter described herein, the computing device 101 sets up an execution environment 200 during operation. The execution environment 200 includes a TEE 210. In this application, the parts in the execution environment 200, other than the TEE 210, are referred to as untrusted execution environment.

As aforementioned, the TEE 210 is a hardware-assisted secure execution environment, which may provide a minimal attack surface (e.g., a processor boundary). The TEE 210 may be implemented in the processor 110 of the computing device 101, and the hardware protection mechanism of the processor 110 provides protection for code and data. The TEE 210 is also assigned a protected memory area 212. The protected memory area 212 is not accessed by non-TEE operations including direct memory access (DMA) from peripherals. In some implementations, the protected memory area 212 is of a predetermined size, for high-speed storage in the TEE, storage of metadata required by memory encryption and decryption, and the like. In some implementations, the TEE 210 may also be implemented as supporting page swapping such that data (e.g., data which is rarely used) in the protected memory area 212 may be exchanged to the unprotected storage, other than the protected memory area, or data may be extracted from the unprotected storage. As such, the TEE 210 may use a storage greater than the protected memory area 212 during execution. The TEE 210 uses symmetric key cryptography in page swapping, to protect the confidentiality and integrity for data.

In accordance with the implementations of the subject matter described herein, a part or all of a deep learning model 220 is executed in the TEE 210. The TEE 210 includes a model executor 214 for executing respective operations in the deep learning model 220.

For the sake of understanding, the deep learning model 220 will be briefly introduced below. In Fig. 2, the deep learning model 220 is shown as a neural network. The neural network has a layered architecture, and each network layer has one or more processing nodes (which are referred to as neuron or filter) for processing. In the neural network, the output of a previous layer after executing processing is an input of a next layer, where the first layer in the architecture receives a model input 172 for processing while the output of the last layer is provided as a model output 174. As shown in Fig. 2, the deep learning model 220 includes N network layers 221, 222-2 ... 222-N, where N is an integer greater than two, and the network layer 222-1 receives the model input 172 while the network layer 222-N provides the model output 174. For the purpose of illustration, the network layers 222-1, 222-2 ... 222-N of the deep learning model 220 sometimes are collectively or individually referred to as network layer 222.

It should be appreciated that, the architecture of the deep learning model and the respective numbers of network layers and processing nodes therein shown in Fig. 2 are provided merely for illustration. In different applications, the deep learning model may be designed with other architecture as required.

Generally, the main processing operation in the neural network is interleaved linear and non-linear swapping. These processes are distributed over individual processing nodes. Fig. 2 also shows an enlarged view of the node 221 in the model 220. The node 221 receives a plurality of input values a1, a2, a3, and the like, and processes the input values based on respective parameter values (e.g., weights w1, w2, w3, and the like), to generate an output z. The node 221 may be designed to process an input using an activation function which may be expressed as below:

$$z = \sigma(\mathbf{w}^T \mathbf{a}) \tag{1}$$

where $\mathbf{a} \in \mathbb{R}^N$ represents an input vector of the node 221 (including elements a1, a2, a3, and the like); $\mathbf{w} \in \mathbb{R}^N$ represents a weight vector in the parameter values used by the node 221 (including elements w1, w2, w3, and the like), where each weight is used to weight the respective input; N represents the number of input values; and $\sigma()$ represents the activation function used by the node 221, which may be a linear function, or a non-linear function. The common activation function used in the neural network includes a sigmoid function, a ReLu function, a tanh function, a maxout function, and the like. The output of the node 221 may also be referred to as activation value. Depending on the network design, the output (i.e., the activation value) of each network layer may be provided as an input to one, more or all nodes of the next layer.

The parameter values of some types of the node 221 may further include a bias for each input, and at this time, the equation (1) may be rewritten as below:

$$z = \sigma(\mathbf{w}^T \mathbf{a} + \mathbf{b}) \tag{2}$$

where $\mathbf{b} \in \mathbb{R}^N$ represents a bias vector (including elements b1, b2, b3, and the like) in the parameter values used by the node 221, and each bias is used to bias a result of a respective input and weight.

Each network layer in the deep learning model 220 may include one or more nodes 221. When the processing in the deep learning model 220 is viewed in the unit of a network layer, the processing of each network layer may be expressed in the similar form of equation (1) or equation (2). At this time, a represents an input vector of the network layer while w and the possible b represent parameter values of the network layer, which are increased respectively.

In some implementations, execution of the deep learning model 220 may be a model execution in a case that the deep learning model 220 has been trained. Values of parameters (or abbreviated as parameter values) in the trained deep learning model 220 are values that have been determined. During a model execution, the trained parameter values are used to process the input of the model, so as to determine a corresponding output. Such a model execution may also be referred to as model inference or model utilization.

In some other implementations, execution of the deep learning model 220 may be a model execution performed at a training stage of the deep learning model 220. At the training stage, the data for training is input to the deep learning model 220, and the current parameter values are adjusted by determining the difference between the actual output of the deep learning model 220 and the output determined based on the current parameter values. During training, it is required to continuously execute ascertaining values of the parameters of the deep learning model 220 until meeting the convergence condition of training. Therefore, each model execution at the model training stage uses the current values of the parameters.

In the deep learning model 220, in particular the deep learning model 220 with the layered structure, processing is executed per layer. The model executor 214 is configured to execute the deep learning model 220 layer by layer. Considering the limited size of the protected memory area 212 of the TEE 210, in some implementations, the deep learning model 220 is parsed, where configuration information, such as the structure of each layer, connection relations, attributes of nodes, and the like, is configured in the TEE 210, while the parameter values 202 are stored in an unprotected memory area outside the TEE 210. Thereupon, the model executor 214 may determine, based on the configuration information, the model structure of the deep learning model 220 and the processing manner of each layer. Since the parameter values of the deep learning model 220 need a large storage and impose a low requirement on security and privacy as compared with user data, they may be stored in the unprotected storage area to save the available storage of the TEE 210. In addition, this can prevent latency caused by frequent page swapping probably resulting from storing a large amount of data in the protected storage area 212, because not all parameter values of the whole model will be used frequently in the TEE 210, which may trigger the page swapping mechanism. The unprotected memory area, for example, may be a general memory of the computing device 110.

When the parameter values are stored in the unprotected memory area, the TEE 210 may further include a parameter loader 216 for loading the required parameter values from an external memory area to the protected memory area 212, for use by the model executor 214. It can improve the efficiency of the storage in the TEE 210. The storage address of the parameter values 202 of the deep learning model 220 may be provided to the parameter loader 216 such that the parameter loader 216 can obtain the required parameter values from the external memory area. Since the deep learning model 220 is executed layer by layer, in some implementations, the parameter loader 216 may load the parameter values layer by layer from the first layer to the last layer of the model. Loading of the parameter values may depend on the current execution stage in the model executor 214.

In some implementations, model execution in the model executor 214 may be triggered by an execution request. For example, the model input 172 of the deep learning model 220 may come from an external device of the computing device 101, for example, the device 102 in Fig. 1. The device 102 may be a terminal device, and the model input 172 provided may be sensitive or private user information. The model input 172 may be provided to the TEE 210 via a secure channel between the device 102 and the TEE 210. In one example, the model input 172 may be encrypted, then received by the communication unit 140 of the computing device 101, and further provided to the TEE 210. The model input 172 is decrypted in the TEE 210, for triggering execution of the deep learning model 210.

In the implementations of the subject matter described herein, the deep learning model 220 to be executed includes one or more convolutional layers 222. The convolutional layer is a type of network layer conventionally used in a deep neural network, which may achieve an excellent processing effect for data, such as images, videos, and the like. The deep learning model 220 with convolutional layers is sometimes referred to as a convolutional neural network. Depending on the configuration of the deep learning model 220, the convolutional layers may be deployed at the first layer and/or the middle layer of the model. As will be discussed below, the convolution in the deep learning model 220 imposes a high requirement on calculating and storage resources, and therefore, the improvement of the convolution is helpful for model execution in the TEE 210 with a high security level but limited memory resources, specifically in the aspects of accelerating the model execution speed and improving the storage utilization.

The convolutional layer 222 in the deep learning model 220 includes one or more convolution kernels which are also referred to as filters. Parameter values of each convolution kernel have three dimensions, namely length, width and depth. The length and width of the convolution kernel are hyper-parameters of the deep learning model 220, which may be specified by a model designer. Length $\times$ width is the size of the convolution kernel, typically, for example, $2\times2$, $3\times3$, $5\times5$, and the like. The depth of the convolution kernel is related to the input of the convolutional layer. Generally, the input of the convolutional layer is represented as one or more two-dimensional feature maps (or, for the first layer, the input is an original image). The depth of the input refers to the number of channels (i.e., the number of feature maps) of the input image. The number of the convolution kernels of each convolutional layer is also a hyper-parameter of the deep learning model 220, which may be pre-specified by a designer. The number of the convolution kernels is equal to the number of feature maps expected to be output by the convolutional layer, which is also preconfigured as a hyper-parameter of the deep learning model 220. The parameter values of each convolution kernel are dot-multiplied by the respective parts of the input of the convolutional layer, and the convolution kernel slides on the input in a predetermined step, such that a plurality of dot-multiplication products can be obtained, forming a corresponding output of the convolution kernel, i.e., a feature map. If the convolutional layer has a plurality of convolution kernels, each of the convolution kernels may be used to calculate correspondingly the feature map as an output of the convolutional layer.

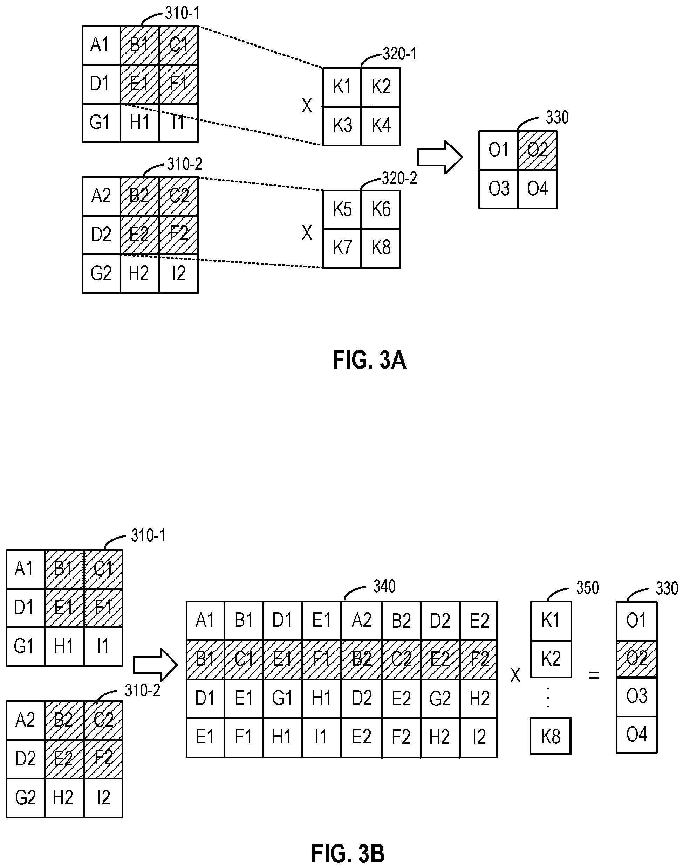

Fig. 3A illustrates a direct convolution in a certain convolutional layer 222 of a deep learning model 220 in an example. In the example of Fig. 3A, the input of the convolutional layer is feature maps 310-1 and 310-2 of $3\times3$, and thus, the dimension of the input is $3\times3\times2$, where 2 represents the number of channels of the input. This convolutional layer uses one convolution kernel with a size of $2\times2$ and a depth of 2, and consequently, for this convolution, two $2\times2$ parameter value windows 320-1 and 320-2 are utilized to execute a convolution on the feature maps 310-1 and 310-2, respectively, where the step of the convolution is 1. For example, the parameter value windows 320-1 and 320-2 are started from the respective left upper corners of the feature maps 310-1 and 310-2, and then move downwards from the left to the right. For example, the parameter value window 320-1 moves and overlaps with elements B1, C1, E1 and F1 of the feature map 310-1 such that the matrix of a respective parameter value K1, K2, K3 or K4 is matrix-multiplied by matrices of elements B1, C1, E1 and F1, to obtain the first intermediate result. Likewise, the parameter value window 320-2 moves upwards on the feature map 310-2, and when moving to elements B2, C2, E2 and F2 of the feature map 310-2, matrix multiplication is performed respectively for these elements, to obtain the second intermediate result. By summing up the first and second intermediate results, an element O2 in the result 330 of the convolution is obtained. Other elements in the result 330 of the convolution may also be determined likewise.

It is seen that the direct convolution requires multiplication operations of a lot of small matrices and thus reduces the processing speed, which causes the direct convolution not suitable for model execution requiring high efficiency.

Currently, a solution for accelerating the convolution has been provided, which is referred to as convolution lowering. Fig. 3B illustrates an example of a fast convolution based on convolution lowering. Based on this convolution, the elements in the feature maps 310-1 and 310-2 of the input of the convolutional layer are rearranged, and the parameters of the convolution kernel in use are deployed such that the multiple matrix multiplications of the convolution can be converted into a single matrix multiplication.

As shown in Fig. 3B, according to the multiple small matrix multiplications of the parameter value windows 320-1 and 320-2 of the convolution kernel with the feature maps 310-1 and 310-2, the elements of the feature maps 310-1 and 310-2 are rearranged into an input matrix 340. The input matrix 340 is related to the size (e.g., the length, width and depth of the convolution kernel) of the set of parameter values of the matrix operation and the size (the length, width and depth of the feature map) of the input. Respective parameter values in the parameter value windows 320-1 and 320-2 are arranged in an $8\times1$ parameter value matrix 350. It should be noted that, if there are a plurality of convolution kernels, parameter values of the plurality of convolution kernels are also rearranged to obtain the single parameter value matrix 350. As such, through a single matrix multiplication operation on the input matrix 340 and the parameter value matrix 350, the result 330 of the convolution can be determined. For example, in the single matrix multiplication operation, after the second row in the input matrix 340 is multiplied by the first column of the parameter value matrix 340, an element O2 in the result 330 is obtained. It should be appreciated that, although individual elements in the result 330 in the matrix are arranged in different ways, their values are the same, and the element arrangement can be adjusted according to needs.

As compared to the multiple matrix multiplication operations, the single matrix multiplication operation after convolution lowering can significantly improve the convolution calculating speed. However, the size of the rearranged input matrix is much greater than the original size of the input of the convolutional layer. For example, if an $M\times M$ convolution kernel is used, the size of the rearranged input matrix is $M^2$ times of the original size. After the convolution, it is required to store the input matrix, which brings significant memory overhead. Hence, as a matter of fact, the convolution lowering trades off the speed against the memory overhead.

There are also other methods for implementing a fast convolution, such as fast Fourier transform (FFT)-based convolution, Winograd-based convolution, and the like. However, neither of these methods can reduce the memory overhead, nor can they achieve a balance between the calculating speed and the memory overhead. Accordingly, neither of the existing fast convolutions is suitable to be used in a TEE with a limited storage.

In accordance with implementations of the subject matter described herein, when it is determined that the convolution in a convolutional layer of a deep learning model 220 is triggered, the model executor 214 in the TEE 210 executes sequentially a plurality of partitioned convolutions which constitute, in combination, the convolution in the convolutional layer. Specifically, in contrast to the convolution lowering solution in which the entire convolution is converted into a single matrix multiplication, in the implementations of the subject matter described herein, the convolution is divided into a plurality of partitioned convolutions, each of which is implemented using a single matrix multiplication.

Specifically, for a given partitioned convolution among the plurality of partitioned convolutions, the model executor 214 determines, from an input of the convolutional layer, an input portion to be processed by the subset of parameter values for the given partitioned convolution, where the input portion is represented by a matrix. When the partitioned convolutions are executed, the set of parameter values of the current convolutional layer is divided into different subsets of parameter values for different partitioned convolutions. In other words, each partitioned convolution executes respective convolutions with different parameter values. In some implementations, parameter values corresponding to each convolution kernel in the convolutional layer are arranged in a column or row of a parameter value matrix corresponding to the set of parameter values. The parameter value matrix may be divided per row or column into a number of subsets of parameter values equal to the number of partitioned convolutions. Each subset of parameter values is also in the form of a matrix. Such division may be even (i.e., the number of parameter values in each subset of parameter values is the same), or may be uneven (i.e., numbers of parameter values in different subsets of parameter values are different). The model executor 214 may determine, from the input of the convolutional layer, an input portion to be processed by a subset of parameter values for a certain partitioned convolution. This input portion includes elements to be multiplied by respective parameter values in the subset of parameter values in the whole convolution.

In some implementations, in order to implement a single matrix multiplication on the input portion and the subset of parameter values, an input of a convolutional layer is converted into an input matrix when determining an input portion for a given partitioned convolution. For example, it is similar to an input rearrangement in the solution of matrix lowering. The arranged input matrix is thus related to the size of the set of parameter values of the matrix operation (e.g., the length, width and depth of the convolution kernel) and the size (the length, width and depth of the feature map) of the input. Accordingly, through rearrangement, the row or column of the input matrix includes therein elements to be multiplied sequentially by respective parameter values in the set of parameter values of the convolution during the convolution (if the direct convolution is to be executed). Note, that the row or column including the elements arranged in this manner is related to the matrix arrangement, and the rows and columns of the matrix may be converted arbitrarily. Subsequently, based on the number of the plurality of partitioned convolutions and the ranking of the given convolution among the plurality of partitioned convolutions, the input portion to be processed by the subset of parameter values for the given partitioned convolution is determined from the input matrix. Consequently, the single input matrix is divided into a number of input matrices equal to the number of the partitioned convolutions.

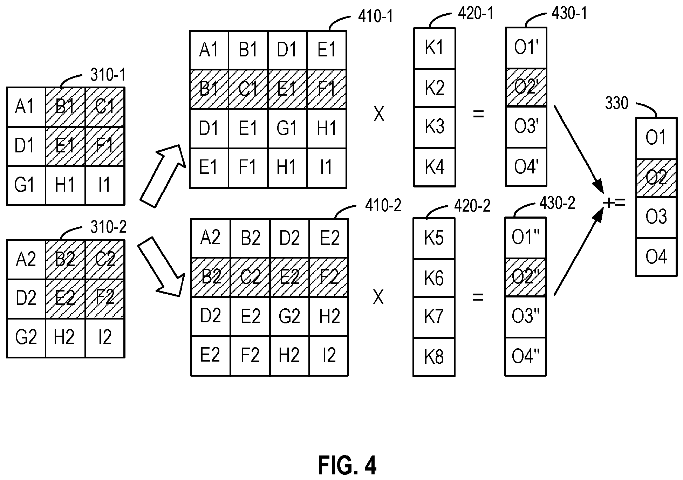

The partitioned convolution in accordance with the subject matter described herein would be understood more thoroughly with reference to Fig. 4. As shown in Fig. 4, the convolution between the input feature maps 310-1 and 310-2 of the convolutional layer and the set of parameter values comprised of the parameter value windows 320-1 and 320-2 is divided into two partitioned convolutions. The set of parameter values is divided into subsets of parameter values 420-1 and 420-2 respectively corresponding to the two partitioned convolutions. In this example, the set of parameter values is divided evenly. In the first partitioned convolution, an input portion 410-1 is determined from the input feature maps 310-1 and 310-2, which is to be processed by the subset of parameter values 420-1. The input portion 410-1 may be determined by dividing the single input matrix (e.g., the single matrix 340 in Fig. 3B) determined from the feature maps 310-1 and 310-2. In this example, since elements in a row of the single matrix 340 are to be multiplied sequentially by respective parameter values in the set of parameter values in the convolution, the input matrix 340 is divided per column into two parts.

After determining the input portion of the given partitioned convolution, the model executor 214 stores the input portion in the protected memory area 212 of the TEE 210. Then, the model executor 214 executes a single matrix multiplication operation on the input portion and the subset of parameter values for the corresponding partitioned convolution, to determine the result of the current partitioned convolution. After the result of the current partitioned convolution is determined, the input portion for the current partitioned convolution is removed from the protected memory area 212, such that this input portion can be reused for storing the next partitioned convolution. It can reduce the storage as required in the convolution process.

For example, in Fig. 4, the model executor 214 first stores the input portion 410-1, then executes a single matrix multiplication operation on the input portion 410-1 and the subset of parameter values 420-1, and determines the result 430-1 of the first partitioned convolution. In the single matrix multiplication operation, each row of the input portion 410-1 is multiplied by the subset of parameter values 420-1, and the multiplication product corresponds to one element in the result 430-1 of the first partitioned convolution. For example, elements B1, C1, E1 and F1 in the second row of the input portion 410-1 is multiplied by the subset of parameter values 420-1, to obtain an element O2' in the result 430-1. At this time, the input portion 410-1 may be removed from the protected memory area 212. Next, the model executor 214 determines and stores an input portion 410-2 to be processed by the next partitioned convolution, and executes a single matrix multiplication for the input portion 410-2 and the subset of parameter values 420-2, to determine the result 430-2 of the second partitioned convolution.

The model executor 210 may execute sequentially a plurality of partitioned convolutions. After determining the result of each partitioned convolution among the plurality of partitioned convolutions, the model executor 214 determines the result of the convolution as the output of the convolutional layer by combining the results of the plurality of partitioned convolutions. For example, in Fig. 4, the model executor 214 combines the result 430-1 of the first partitioned convolution and the result 430-2 of the second partitioned convolution, and then determines the final result 330 of the convolution. In implementations of the subject matter described herein, a convolution in a convolutional layer is represented as a sum of a plurality of partitioned convolutions, which may be expressed below:

$$O = \begin{bmatrix} I_1 & I_2 & \cdots & I_n \end{bmatrix} \cdot \begin{bmatrix} K_1 \\ K_2 \\ \vdots \\ K_n \end{bmatrix} = \sum_{i=1}^{n} I_i \cdot K_i \qquad (3)$$

where O represents a result of a convolution, i.e., an output of a convolutional layer; $I_i$ represents the $i^{th}$ input portion; $K_i$ represents the $i^{th}$ subset of parameter values; and $n$ represents the number of partitioned convolutions.

In the partitioned convolution process of the subject matter described herein, since it is only needed to store the input portion to be used in the current partitioned convolution in each partitioned convolution, the input portion used in the previous partitioned convolution is removed in time, thereby reducing the storage required in the process of implementing convolution. Due to the reduction of the utilized storage, the deep learning model is more suitable to be executed in a TEE with a limited storage. In some implementations, the result of each partitioned convolution is also stored in the protected memory area 212 until the final result of the convolution is determined.

In some implementations, for a particular convolutional layer, the number of partitioned convolutions to be executed may be determined based on the size of the available storage size of the protected memory area 212. Whenever a convolution in a certain convolutional layer is executed, the model executor 214 may determine, based on the size of the current available storage, the number of the portioned convolutions to be executed. The number of the partitioned convolutions may be dedicated to the deep learning model to be executed. For example, it may be determined based on the convolutional layer having the greatest memory consumption in the deep learning model. The number of the partitioned convolutions may also be any fixed value.

In some implementations, the number of the partitioned convolutions to be executed may be $2^n$, where n may be an integer greater than or equal to one. In some implementations, the number of the partitioned convolutions to be executed may be set less than the number of the matrix multiplication operations to be executed in the direct convolution, to enable the speed of the whole convolution process to be improved, as compared with the number of the direction convolutions. For example, in the example of Fig. 4, the number of the partitioned convolutions may be less than eight.

In some implementations, the model executor 214 may determine the number of the partitioned convolutions to be executed, such that the storage as required in each of the sequentially executed convolutions is less than a predetermined storage threshold. The predetermined storage threshold may be determined based on the total size of the protected memory area 212 of the TEE 210, the size of other storages necessarily involved in the execution of the deep learning model 220, and the like. In one example, the predetermined storage threshold may be set to 32 MB.

How the convolution in the convolutional layer of the deep learning model 220 is executed in the TEE 210 has been discussed above. According to the layer-wise execution sequence of the deep learning model 220, if the convolution in the convolutional layer of the deep learning model 220 is triggered, the model executor 214 executes the convolution in the current convolutional layer. Triggering of the corresponding convolution in the convolutional layer may be determined in response to the input of the convolutional layer. The input of the convolutional layer depends on the position of the convolutional layer in the deep learning model 220. For example, if this convolutional layer is located at the first layer of the deep learning model 220, the convolution is triggered upon receiving the model input 172. If the convolutional layer is located at the middle layer of the deep learning model 220, the convolution in the convolutional layer is triggered when the output of the network layer (which may be a convolutional layer or any other layer, such as a pool layer, and the like) preceding the convolutional layer, thus the output of the previous network layer is used as an input of the convolutional layer.

During the convolution, the original input of the convolutional layer (rather than the respective input portions after convolution lowering) is also stored in the protected memory area 212. After determining the output of the convolutional layer, if the original input of the convolutional layer will not be used in the subsequent layers of the deep learning model, the model executor 214 or other components in the TEE 210 may remove the input of the convolutional layer from the protected memory area 212, to further reduce the consumption of the storage. Similarly, after the output of the convolutional layer is determined, if the current convolutional layer is the middle layer of the deep learning model 220, its output will be used as an input in the next layer. As a result, the model executor 214 may store this output in the protected memory area 212, for convenient use by the subsequent layers. If it is determined thereafter that this output will be not used, the output may be removed from the protected memory area 212. For network layers, other than the convolutional layer of the deep learning model 210, the input/output of the middle network layer may be similarly cleared in time from the protected memory area 212. It should be appreciated that inputs of some types of networks may be further used after a plurality of subsequent network layers. Such input may be removed after determining, through model operation logic analysis, that it will not be used any longer. Reuse after several network layers often occurs in a recurrent neural network (RNN).

As mentioned above, in the TEE 210, since the parameter values of the deep learning model 220 are stored in the memory area outside the TEE 210, depending on a current execution stage in the model executor 214, the parameter loader 216 loads the parameter values as required by the model execution from the outside into the TEE 210. In some implementations, since the plurality of partitioned convolutions are executed sequentially, the parameter loader 216 may load the parameter values per partitioned convolution. For example, when determining that the given partitioned convolution is to be executed, the parameter loader 216 loads the corresponding subset of parameter values from the memory area outside the TEE 210 into the protected memory area 212. In some implementations, in order to prevent the model executor 214 from waiting for parameter loading, the parameter loader 216 needs to ensure that loading of the corresponding subset of parameter values has been completed when the given partitioned convolution is executed.

In some implementations, parameter loading and model execution may be performed in parallel to improve the efficiency. For example, during execution of the convolution, when the model executor 214 is executing a certain partitioned convolution, the parameter loader 216 may load concurrently the subset of parameter values to be used by the partitioned convolution following the one being executed currently. This can ensure that, when the model executor 214 is to execute the following partitioned convolution, the corresponding subset of parameter values is already ready in the protected memory area 212. In the whole execution process of the deep learning model 220, besides the convolutional layer, the parameter loader 216 likewise may execute parameter loading in parallel with the model execution. For example, when the model executor 214 is performing an operation on a network layer, the parameter loader 216 may continue loading parameter values of the next network layer at the same time.

Besides performing a parameter value loading per network layer or per partitioned convolution, the parameter loader 216 may also load parameter values per any other unit. For example, the parameter loader 216 may divide parameter values of a network layer into a plurality of blocks, and load the parameter values block by block. The model executor 214 may perform sequential operations according to the loaded parameter values. In another example, the parameter loader 216 may also load parameter values of a plurality of network layers or parameter values of a plurality of partitioned convolutions each time.

In some implementations, after the respective operation is completed, the loaded parameter values will be not used any long and thus may be removed from the protected memory area 212, to save the storage. For example, after determining the result of a partitioned convolution, the subset of parameter values used by this partitioned convolution is removed from the protected memory area 212.

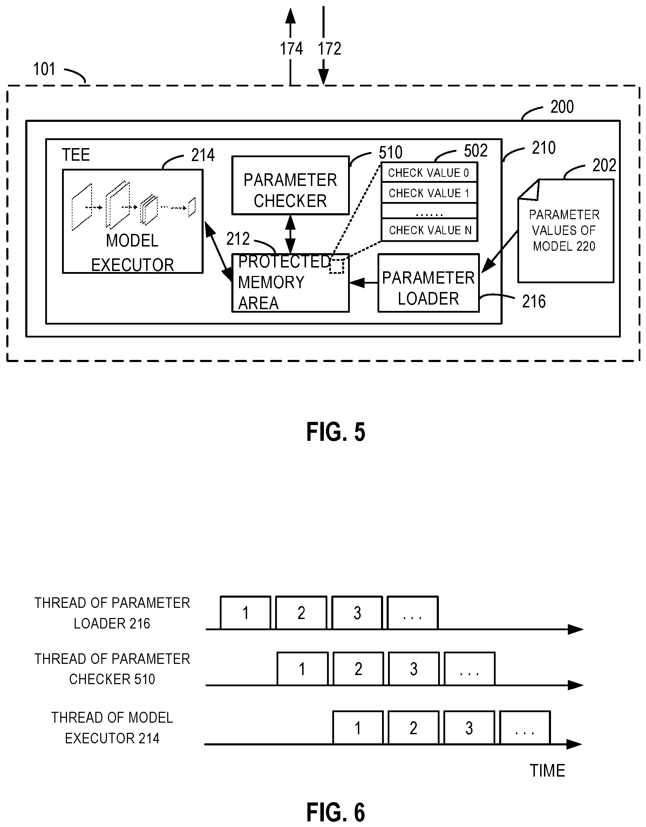

Since the parameter values of the deep learning model 210 are stored in the unprotected external memory area, in some implementations, an integrity check on parameter values may be executed in the TEE 210 after the parameter values are obtained from the external memory area. Fig. 5 illustrates an example of those implementations. As shown in Fig. 5, the TEE 210 includes therein a parameter checker 510.

The protected memory area 212 pre-stores therein a set of expected integrity check values 502 for the parameter values of the deep learning model 210. The expected integrity check values in the set 502 may be stored at the initial stage when the TEE 210 is created. An expected integrity check value may be calculated for each subset of parameter values for the deep learning model 210; or the subset of parameter values may be further divided into a plurality of smaller subsets, and an expected integrity check value may be calculated for each smaller subset. For a set of parameter values of other network layers in the deep learning model 210, an individual expected integrity check value may be calculated similarly; or the set of parameter values may be divided into a plurality of subsets, and an expected check value may be calculated for each subset. For example, the integrity check value may be determined by performing a hash operation on the corresponding parameter values, and such integrity value may also be referred to as hash check value.

After the parameter loader 216 obtains, from the outside, the subset of parameter values used by the given convolution, the parameter checker 510 also calculates the integrity check value of the obtained subset of parameter values in a similar manner, and then compares the calculated integrity check value with the corresponding expected integrity check value. If the calculated integrity check value matches (i.e., the same as) the expected integrity check value, the parameter checker 510 confirms the integrity of the subset of parameter values. In this case, the subset of parameter values is officially stored in the protected memory area 212. In some implementations, if the integrity check on the subset of parameter values fails, the parameter checker 510 may enable the model execution process in the TEE 210 to stop. Subsequently, the TEE 210 returns an error message to the device 102, indicating that an error occurs to the parameter values of the deep learning model 210. There are a lot of options available for the subsequent processing of the error, and whether the model execution is continued may be determined by the device 102 or its user.

In some implementations, given that the parameter values can be used by the model executor 214 only after passing the check, the three stages including parameter loading, parameter check and model execution can be executed in parallel in order to improve the efficiency of model execution. In some implementations, the protected memory area 212 is configured therein with a ring buffer for storing the subset of parameter values. In the TEE 210, parallel pipeline threads for these three processing stages may be created. Fig. 6 illustrates pipeline processing of the parameter loader 216, the parameter checker 510 and the model executor 214.

Once a subset of parameter values is placed by the parameter loader 216 into the ring buffer, the parameter checker 510 may immediately start to calculate and check the integrity check value of the subset of parameter values. At this time, the parameter loader 216 starts to load the next subset of parameter values. Likewise, after the parameter checker 510 completes the check, the model executor 214 may immediately start model execution using the subset of parameter values that have been checked, and the parameter checker 510 may start to check the next subset of parameter values. After having been used in the model execution, the subset of parameter values may be released from the ring buffer such that the ring buffer can be used to load new parameter values.

As can be seen from Fig. 6, at the same time, the model executor 214 may execute the first partitioned convolution with the first subset of parameter values (which is represented as block 1), and the parameter checker 510 may execute an integrity check on the second subset of parameter values (which is represented as block 2) to be used in the second partitioned convolution following the first partitioned convolution, and the parameter loader 216 may load the third subset of parameter values (which is represented as block 3) following the second partitioned convolution being executed. Such parallel pipeline processing may increase the model execution speed in the TEE.

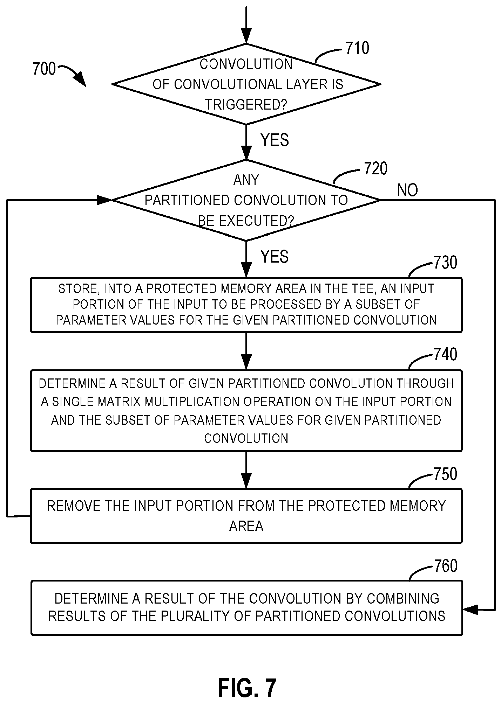

Fig. 7 is a flowchart of a process 700 in accordance with some implementations of the subject matter described herein. The process 700 may be implemented by the computing device 101, for example, in the processor 110 of the computing device 101.

At block 710, the computing device 101 determines that a convolution in a convolutional layer of a deep learning model is triggered. In response to the convolution in the convolution layer of the deep learning model being triggered, at block 720, the computing device 101 determines whether there is still a partitioned convolution to be executed in the plurality of partitioned convolutions. The plurality of partitioned convolutions are executed with different subsets of parameter values divided from the set of parameter values. If there is a partitioned convolution to be executed, at block 730, the computing device 101 stores, into a protected memory area of the TEE, an input portion to be processed by a subset of parameter values for a given partitioned convolution. The input portion is represented as a matrix. At block 740, through a single matrix multiplication operation on the input portion and the subset of parameter values for the given partitioned convolution, the computing device 101 determines the result of the given partitioned convolution. The subset of parameter values is represented as a matrix. At block 750, the computing device 101 removes the input portion from the protected memory area.

Subsequently, the process 700 returns to block 720 where the computing device 101 continues to determine there still remains a portioned convolution that has not been executed, and if there is a partitioned convolution to be executed, blocks 730 to 750 are repeated to determine the result of the partitioned convolution until all partitioned convolutions are executed. If there is no partitioned convolution to be executed, at block 760, the computing device 101 determines the result of the convolution as the output of the convolutional layer by combining the results of the plurality of partitioned convolutions.

In some implementations, during execution of a deep learning model, if the convolution in the convolutional layer is not triggered, an operation in other types of network layers is performed. The computing device 101 may also obtain, based on the configuration of the model, respective parameter values from outside of the TEE, and perform, based on the obtained parameter values, an operation of the respective network layer.

In some implementations, the number of the plurality of partitioned convolutions is determined based on an available storage size of the protected memory area.

Storing the input portion into the protected memory area comprises: converting the input into an input matrix based on a size of the set of parameter values and a size of the input, elements in a row or column of the input matrix to be sequentially multiplied by respective parameter values in the set of parameter values in the convolution; determining an input portion corresponding to the subset of parameter values from the input matrix based on the number of the plurality of partitioned convolutions and a ranking of the given convolution among the plurality of partitioned convolutions; and storing the determined input portion into the protected memory area.

In some implementations, the set of parameter values is stored in a memory area outside the TEE. The process 700 further comprises: in response to determining that the given partitioned convolution is to be executed, loading the subset of parameter values from the memory area outside the TEE into the protected memory area.

In some implementations, loading the subset of parameter values into the protected memory area further comprises: performing an integrity check on the subset of parameter values in the TEE, comprising: calculating an integrity check value of the subset of parameter values, comparing the calculated integrity check value with an expected integrity check value stored in the protected memory area, and in response to the integrity check value calculated matching with the expected integrity check value, confirming integrity of the subset of parameter values; and in response to the confirming the integrity of the subset of parameter values, storing the subset of parameter values into the protected memory area.

In some implementations, the process 700 further comprises: after determining the result of the given partitioned convolution, removing the subset of parameter values from the protected memory area.

In some implementations, calculating the integrity check value of the subset of parameter values comprises:

determining the integrity check value by performing a hash operation on the subset of parameter values.

In some implementations, loading the subset of parameter values into the protected memory area comprises: in parallel with execution of a partitioned convolution preceding the given partitioned convolution among the plurality of partitioned convolutions, loading the subset of parameter values into the protected memory area.

In some implementations, performing the integrity check on the subset of parameter values in the TEE comprises performing the integrity check on the subset of parameter values in the TEE in parallel with the following: execution of a partitioned convolution preceding the given partitioned convolution among the plurality of partitioned convolutions, and loading of a further subset of parameter values into the protected memory area, subset of parameter values a partitioned convolution following the given partitioned convolution among the plurality of partitioned convolution being executed with the further subset of parameter values.

In some implementations, the set of parameter values comprises a set of trained parameter values of the deep learning model or a set of training parameter values of the deep learning model.

In some implementations, the input of the convolutional layer is stored into the protected memory area. The process 700 further comprises, in response to a determination that the input is out of use in a subsequent layer of the deep learning model after the output is determined, removing the input from the protected memory area.

Some example implementations of the subject matter described herein will be listed below.

In an aspect, the subject matter described herein provides a computer-implemented method. The method comprises: in response to a convolution in a convolutional layer of a deep learning model being triggered, executing based on an input and a set of parameter values of the convolutional layer, a plurality of partitioned convolutions sequentially in a trusted execution environment (TEE) of a computing device, the plurality of partitioned convolutions being executed with different subsets of parameter values divided from the set of parameter values, the execution of a given one of the plurality of partitioned convolutions comprising: storing, into a protected memory area in the TEE, an input portion of the input to be processed by a subset of parameter values for the given partitioned convolution, the input portion being represented as a matrix, determining a result of the given partitioned convolution through a single matrix multiplication operation on the input portion and the subset of parameter values for the given partitioned convolution, the subset of parameter values being represented as a matrix, and removing the input portion from the protected memory area; and determining a result of the convolution as an output of the convolutional layer by combining results of the plurality of partitioned convolutions.

In some implementations, the number of the plurality of partitioned convolutions is determined based on an available storage size of the protected memory area.

In some implementations, storing the input portion into the protected memory area comprises: converting the input into an input matrix based on a size of the set of parameter values and a size of the input, elements in a row or column of the input matrix to be sequentially multiplied by respective parameter values in the set of parameter values in the convolution; determining an input portion corresponding to the subset of parameter values from the input matrix based on the number of the plurality of partitioned convolutions and a ranking of the given convolution among the plurality of partitioned convolutions; and storing the determined input portion into the protected memory area.

In some implementations, the set of parameter values is stored in a memory area outside the TEE. The method further comprises: in response to determining that the given partitioned convolution is to be executed, loading the subset of parameter values from the memory area outside the TEE into the protected memory area.

In some implementations, loading the subset of parameter values into the protected memory area further comprises: performing an integrity check on the subset of parameter values in the TEE, comprising: calculating an integrity check value of the subset of parameter values, comparing the calculated integrity check value with an expected integrity check value stored in the protected memory area, and in response to the integrity check value calculated matching with the expected integrity check value, confirming integrity of the subset of parameter values; and in response to confirming the integrity of the subset of parameter values, storing the subset of parameter values into the protected memory area.

In some implementations, the method further comprises: after determining the result of the given partitioned convolution, removing the subset of parameter values from the protected memory area.

In some implementations, calculating the integrity check value of the subset of parameter values comprises: determining the integrity check value by performing a hash operation on the subset of parameter values.

In some implementations, loading the subset of parameter values into the protected memory area comprises: in parallel with execution of a partitioned convolution preceding the given partitioned convolution among the plurality of partitioned convolutions, loading the subset of parameter values into the protected memory area.

In some implementations, performing the integrity check on the subset of parameter values in the TEE comprises performing the integrity check on the subset of parameter values in the TEE in parallel with the following: execution of a partitioned convolution preceding the given partitioned convolution among the plurality of partitioned convolutions, and loading of a further subset of parameter values into the protected memory area, a partitioned convolution following the given partitioned convolution among the plurality of partitioned convolution being executed with the further subset of parameter values.

In some implementations, the set of parameter values comprises a set of trained parameter values of the deep learning model or a set of training parameter values of the deep learning model.

In some implementations, the input of the convolutional layer is stored into the protected memory area, the method further comprising: in response to a determination that the input out of use in a subsequent layer of the deep learning model after the output is determined, removing the input from the protected memory area.

In another aspect, the subject matter described herein provides an electronic device. The electronic device comprises: a processor; and a memory coupled to the processor and having instructions stored thereon which, when executed by the processor, cause the device to perform acts of: in response to a convolution in a convolutional layer of a deep learning model being triggered, executing, based on an input and a set of parameter values of the convolutional layer, a plurality of partitioned convolutions sequentially in a trusted execution environment (TEE) of a computing device, the plurality of partitioned convolutions being executed with different subsets of parameter values divided from the set of parameter values, the execution of a given one of the plurality of partitioned convolutions comprising: storing, into a protected memory area in the TEE, an input portion of the input to be processed by a subset of parameter values for the given partitioned convolution, the input portion being represented as a matrix, determining a result of the given partitioned convolution through a single matrix multiplication operation on the input portion and the subset of parameter values for the given partitioned convolution, the subset of parameter values being represented as a matrix, and removing the input portion from the protected memory area; and determining a result of the convolution as an output of the convolutional layer by combining results of the plurality of partitioned convolutions.

In some implementations, the number of the plurality of partitioned convolutions is determined based on an available storage size of the protected memory area.

In some implementations, storing the input portion into the protected memory area comprises: converting the input into an input matrix based on a size of the set of parameter values and a size of the input, elements in a row or column of the input matrix to be sequentially multiplied by respective parameter values in the set of parameter values in the convolution; determining an input portion corresponding to the subset of parameter values from the input matrix based on the number of the plurality of partitioned convolutions and a ranking of the given convolution among the plurality of partitioned convolutions,; and storing the determined input portion into the protected memory area.

In some implementations, the set of parameter values is stored in a memory area outside the TEE, the acts further comprise: in response to determining that the given partitioned convolution is to be executed, loading the subset of parameter values from the memory area outside the TEE into the protected memory area.

In some implementations, loading the subset of parameter values into the protected memory area further comprises: performing an integrity check on the subset of parameter values in the TEE comprising: calculating an integrity check value of the subset of parameter values, comparing the calculated integrity check value with an expected integrity check value stored in the protected memory area, and in response to the calculated integrity check value matching with the expected integrity check value, confirming integrity of the subset of parameter values; and in response to confirming the integrity of the subset of parameter values, storing the subset of parameter values into the protected memory area.

In some implementations, the acts further comprise: after determining the result of the given partitioned convolution, removing the subset of parameter values from the protected memory area.

In some implementations, calculating the integrity check value of the subset of parameter values comprises: determining the integrity check value by performing a hash operation on the subset of parameter values.

In some implementations, loading the subset of parameter values into the protected memory area comprises: in parallel with execution of a partitioned convolution preceding the given partitioned convolution among the plurality of partitioned convolutions, loading the subset of parameter values into the protected memory area.

In some implementations, performing the integrity check on the subset of parameter values in the TEE comprises performing the integrity check on the subset of parameter values in the TEE in parallel with the following, comprising: execution of a partitioned convolution preceding the given partitioned convolution among the plurality of partitioned convolutions, and loading of a further subset of parameter values into the protected memory area, a partitioned convolution following the given partitioned convolution among the plurality of partitioned convolution being executed with the further subset of parameter values.

In some implementations, the set of parameter values comprises a set of trained parameter values of the deep learning model or a set of training parameter values of the deep learning model.

In some implementations, the input of the convolutional layer is stored into the protected memory area, the acts further comprising: in response to a determination that the input is out of use in a subsequent layer of the deep learning model after the output is determined, removing the input from the protected memory area.

In a further aspect, the subject matter described herein provides a computer program product being tangibly stored on a computer storage medium and comprising machine-executable instructions which, when executed by a device, cause the device to: in response to a convolution in a convolutional layer of a deep learning model being triggered, execute, based on an input and a set of parameter values of the convolutional layer, a plurality of partitioned convolutions sequentially in a trusted execution environment (TEE) of a computing device, the plurality of partitioned convolutions being executed with different subsets of parameter values divided from the set of parameter values, the execution of a given one of the plurality of partitioned convolutions comprising: storing, into a protected memory area in the TEE, an input portion of the input to be processed by a subset of parameter values for the given partitioned convolution, the input portion being represented as a matrix, determining a result of the given partitioned convolution through a single matrix multiplication operation on the input portion and the subset of parameter values for the given partitioned convolution, the subset of parameter values being represented as a matrix, and removing the input portion from the protected memory area; and determine a result of the convolution as an output of the convolutional layer by combining results of the plurality of partitioned convolutions.

In some implementations, the number of the plurality of partitioned convolutions is determined based on an available storage size of the protected memory area.

In some implementations, storing the input portion into the protected memory area comprises: converting the input into an input matrix based on a size of the set of parameter values and a size of the input, elements in a row or column of the input matrix to be sequentially multiplied by respective parameter values in the set of parameter values in the convolution; determining an input portion corresponding to the subset of parameter values from the input matrix based on the number of the plurality of partitioned convolutions and a ranking of the given convolution among the plurality of partitioned convolutions; and storing the determined input portion into the protected memory area.

In some implementations, the set of parameter values is stored in a memory area outside the TEE, the acts further comprise: in response to determining that the given partitioned convolution is to be executed, loading the subset of parameter values from the memory area outside the TEE into the protected memory area.

In some implementations, loading the subset of parameter values into the protected memory area further comprises: performing an integrity check on the subset of parameter values in the TEE, comprising: calculating an integrity check value of the subset of parameter values, comparing the calculated integrity check value with an expected integrity check value stored in the protected memory area, and in response to the calculated integrity check value matching with the expected integrity check value, confirming integrity of the subset of parameter values; and in response to confirming the integrity of the subset of parameter values, storing the subset of parameter values into the protected memory area.

In some implementations, the acts further comprise: after determining the result of the given partitioned convolution, removing the subset of parameter values from the protected memory area.

In some implementations, calculating the integrity check value of the subset of parameter values comprises: determining the integrity check value by performing a hash operation on the subset of parameter values.

In some implementations, loading the subset of parameter values into the protected memory area comprises: in parallel with execution of a partitioned convolution preceding the given partitioned convolution among the plurality of partitioned convolutions, loading the subset of parameter values into the protected memory area.

In some implementations, performing the integrity check on the subset of parameter values in the TEE comprises performing the integrity check on the subset of parameter values in the TEE in parallel with the following: execution of a partitioned convolution preceding the given partitioned convolution among the plurality of partitioned convolutions, and loading of a further subset of parameter values into the protected memory area, a partitioned convolution following the given partitioned convolution among the plurality of partitioned convolution being executed with the further subset of parameter values.

In some implementations, the set of parameter values comprises a trained set of parameter values of the deep learning model or a training set of parameter values of the deep learning model.

In some implementations, the input of the convolutional layer is stored into the protected memory area, the acts further comprising: in response to a determination that the input is out of use in a subsequent layer of the deep learning model after the output is determined, removing the input from the protected memory area.

In a still further aspect, the subject matter described herein provides a computer-readable medium having machine-executable instructions which, when executed by a device, cause the device to perform the above method.

The functions described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), and the like.

Program code for carrying out methods of the subject matter described herein may be written in any combination of one or more programming languages. These program codes may be provided to a processor or controller of a general purpose computer, special purpose computer, or other programmable data processing apparatuses, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine-readable medium may be any tangible medium that may contain, or store a program for use by or in connection with an instruction execution system, apparatus, or device. The machine-readable medium may be a machine-readable signal medium or a machine-readable storage medium. A machine-readable medium may include but is not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in the context of a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

**1.** A computer-implemented method, comprising:

in response to a convolution in a convolutional layer (222) of a deep learning model (220) being triggered, executing, based on an input and a set of parameter values (202) of the convolutional layer, a plurality of partitioned convolutions sequentially in a trusted execution environment (TEE) (210) of a computing device (101) the plurality of partitioned convolutions being executed with different subsets of parameter values divided from the set of parameter values, the execution of a given one of the plurality of partitioned convolutions comprising:

storing, into a protected memory area (212) in the TEE, an input portion of the input to be processed by a subset of parameter values for the given partitioned convolution, the input portion being represented as a matrix,
determining a result of the given partitioned convolution through a single matrix multiplication operation on the input portion and the subset of parameter values for the given partitioned convolution, the subset of parameter values being represented as a matrix, and
removing the input portion from the protected memory area; and

determining a result of the convolution as an output of the convolutional layer by combining results of the plurality of partitioned convolutions,
wherein storing the input portion into the protected memory area comprises:

converting the input into an input matrix based on a size of the set of parameter values and a size of the input, such that elements in a row or column of the input matrix are to be sequentially multiplied by respective parameter values in the set of parameter values in the convolution;
determining an input portion corresponding to the subset of parameter values from the input matrix based on the number of the plurality of partitioned convolutions and a ranking of the given convolution among the plurality of partitioned convolutions; and
storing the determined input portion into the protected memory area.

**2.** The method of claim 1, wherein the number of the plurality of partitioned convolutions is determined based on an available storage size of the protected memory area.

**3.** The method of claim 1, wherein the set of parameter values is stored in a memory area outside the TEE, the method further comprising:
in response to determining that the given partitioned convolution is to be executed, loading the subset of parameter values from the memory area outside the TEE into the protected memory area.

4. The method of claim 3, wherein loading the subset of parameter values into the protected memory area further comprises:

performing an integrity check on the subset of parameter values in the TEE, comprising:

calculating an integrity check value of the subset of parameter values,
comparing the calculated integrity check value with an expected integrity check value stored in the protected memory area, and
in response to the integrity check value calculated matching with the expected integrity check value, confirming integrity of the subset of parameter values; and

in response to confirming the integrity of the subset of parameter values, storing the subset of parameter values into the protected memory area.

5. The method of claim 4, further comprising:
after determining the result of the given partitioned convolution, removing the subset of parameter values from the protected memory area.

6. The method of claim 4, wherein calculating the integrity check value of the subset of parameter values comprises:
determining the integrity check value by performing a hash operation on the subset of parameter values.

7. The method of claim 3, wherein loading the subset of parameter values into the protected memory area comprises:
in parallel with execution of a partitioned convolution preceding the given partitioned convolution among the plurality of partitioned convolutions, loading the subset of parameter values into the protected memory area.

8. The method of claim 4, wherein performing the integrity check on the subset of parameter values in the TEE comprises performing the integrity check on the subset of parameter values in the TEE in parallel with the following:

execution of a partitioned convolution preceding the given partitioned convolution among the plurality of partitioned convolutions, and
loading of a further subset of parameter values into the protected memory area, a partitioned convolution following the given partitioned convolution among the plurality of partitioned convolutions being executed with the further subset of parameter values.

9. An electronic device (101), comprising:

a processor (110); and
a memory (120) coupled to the processor (110) and having instructions stored thereon which, when executed by the processor (110), cause the device to perform acts of:

in response to a convolution in a convolutional layer (222) of a deep learning model (220) being triggered, executing, based on an input and a set of parameter values (202) of the convolutional layer (222), a plurality of partitioned convolutions sequentially in a trusted execution environment (TEE) (210) of a computing device (101), the plurality of partitioned convolutions being executed with different subsets of parameter values divided from the set of parameter values (202), the execution of a given one of the plurality of partitioned convolutions comprising:

storing, into a protected memory area (212) in the TEE (210), an input portion of the input to be processed by a subset of parameter values for the given partitioned convolution, the input portion being represented as a matrix,
determining a result of the given partitioned convolution through a single matrix multiplication operation on the input portion and the subset of parameter values for the given partitioned convolution, the subset of parameter values being represented as a matrix, and
removing the input portion from the protected memory area (212); and

determining a result of the convolution as an output of the convolutional layer (222) by combining results of the plurality of partitioned convolutions,
wherein storing the input portion into the protected memory area (212) comprises:

converting the input into an input matrix based on a size of the set of parameter values (202) and a size of the input, such that elements in a row or column of the input matrix are to be sequentially multiplied by respective parameter values in the set of parameter values (202) in the convolution;

determining an input portion corresponding to the subset of parameter values from the input matrix based on the number of the plurality of partitioned convolutions and a ranking of the given convolution among the plurality of partitioned convolutions; and

storing the determined input portion into the protected memory area (212).

10. The device (101) of claim 9, wherein the number of the plurality of partitioned convolutions is determined based on an available storage size of the protected memory area (212).

11. The device (101) of claim 9, wherein the set of parameter values (202) is stored in a memory area outside the TEE (210), the acts further comprise:

in response to determining that the given partitioned convolution is to be executed, loading the subset of parameter values from the memory area outside the TEE (210) into the protected memory area (212).

12. The device (101) of claim 11, wherein loading the subset of parameter values (202) into the protected memory area (212) further comprises:

performing an integrity check on the subset of parameter values in the TEE (210), comprising:

calculating an integrity check value of the subset of parameter values,
comparing the calculated integrity check value with an expected integrity check value stored in the protected memory area (212), and
in response to the integrity check value calculated matching with the expected integrity check value, confirming integrity of the subset of parameter values; and

in response to confirming the integrity of the subset of parameter values, storing the subset of parameter values into the protected memory area (212).

13. A computer program product being tangibly stored on a computer storage medium and comprising machine-executable instructions which, when executed by a device, cause the device to perform the method of any of claims 1-8.

**Patentansprüche**

1. Computerimplementiertes Verfahren, umfassend:

als Reaktion darauf, dass eine Faltung in einer Faltungsschicht (222) eines Deep-Learning-Modells (220) ausgelöst wird, Ausführen, basierend auf einer Eingabe und einer Menge von Parameterwerten (202) der Faltungsschicht, einer Vielzahl von untergliederten Faltungen sequentiell in einer Trusted Execution Environment (TEE) (210) einer Computervorrichtung (101), wobei die Vielzahl von untergliederten Faltungen mit verschiedenen Teilmengen von Parameterwerten ausgeführt wird, die aus der Menge von Parameterwerten aufgeteilt sind, wobei die Ausführung einer vorgegebenen der Vielzahl von untergliederten Faltungen umfasst:

Speichern eines Eingabeabschnitts der durch eine Teilmenge von Parameterwerten für die vorgegebene untergliederte Faltung zu verarbeitenden Eingabe in einem geschützten Speicherbereich (212) in der TEE, wobei der Eingabeabschnitt als eine Matrix dargestellt wird,
Bestimmen eines Ergebnisses der vorgegebenen untergliederten Faltung durch eine einzelne Matrixmultiplikationsoperation auf dem Eingabeabschnitt und der Teilmenge von Parameterwerten für die vorgegebene untergliederte Faltung, wobei die Teilmenge von Parameterwerten als eine Matrix dargestellt wird, und
Entfernen des Eingabeabschnitts aus dem geschützten Speicherbereich; und
Bestimmen eines Ergebnisses der Faltung als eine Ausgabe der Faltungsschicht durch Kombinieren von Ergebnissen der Vielzahl von untergliederten Faltungen,
wobei das Speichern des Eingabeabschnitts im geschützten Speicherbereich umfasst:

Umwandeln der Eingabe in eine Eingabematrix basierend auf einer Größe der Menge von Parameterwerten und einer Größe der Eingabe, so dass Elemente in einer Zeile oder Spalte der Eingabematrix sequentiell mit entsprechenden Parameterwerten in der Menge von Parameterwerten in der Faltung zu multiplizieren sind; Bestimmen eines Eingabeabschnitts entsprechend der Teilmenge von Parameterwerten aus der Eingabematrix basierend auf der Zahl der Vielzahl von untergliederten Faltungen und einer Rangfolge der vorgegebenen Faltung aus der Vielzahl von untergliederten Faltungen; und Speichern des bestimmten Eingabeabschnitts im geschützten Speicherbereich.

2. Verfahren nach Anspruch 1, wobei die Zahl der Vielzahl von untergliederten Faltungen basierend auf einer verfügbaren Speichergröße des geschützten Speicherbereichs bestimmt wird.

3. Verfahren nach Anspruch 1, wobei die Menge von Parameterwerten in einem Speicherbereich außerhalb der TEE gespeichert wird, wobei das Verfahren ferner umfasst: als Reaktion auf das Bestimmen, dass die vorgegebene untergliederte Faltung ausgeführt werden soll, Laden der Teilmenge von Parameterwerten aus dem Speicherbereich außerhalb der TEE in den geschützten Speicherbereich.

4. Verfahren nach Anspruch 3, wobei das Laden der Teilmenge von Parameterwerten in den geschützten Speicherbereich ferner umfasst: Ausführen einer Integritätsprüfung an der Teilmenge von Parameterwerten in der TEE, umfassend:

    Berechnen eines Integritätsprüfwertes für die Teilmenge von Parameterwerten, Vergleichen des berechneten Integritätsprüfwertes mit einem erwarteten Integritätsprüfwert, der im geschützten Speicherbereich gespeichert ist, und als Reaktion auf die Übereinstimmung des berechneten Integritätsprüfungswertes mit dem erwarteten Integritätsprüfungswert, Bestätigen der Integrität der Teilmenge von Parameterwerten; und als Reaktion auf das Bestätigen der Integrität der Teilmenge von Parameterwerten, Speichern der Teilmenge von Parameterwerten im geschützten Speicherbereich.

5. Verfahren nach Anspruch 4, ferner umfassend: nach dem Bestimmen des Ergebnisses der vorgegebenen untergliederten Faltung Entfernen der Teilmenge von Parameterwerten aus dem geschützten Speicherbereich.

6. Verfahren nach Anspruch 4, wobei das Berechnen des Integritätsprüfwertes der Teilmenge von Parameterwerten umfasst: Bestimmen des Integritätsprüfwertes durch Ausführen einer Hash-Operation an der Teilmenge von Parameterwerten.

7. Verfahren nach Anspruch 3, wobei das Laden der Teilmenge von Parameterwerten in den geschützten Speicherbereich umfasst: parallel zur Ausführung einer untergliederten Faltung, die der vorgegebenen untergliederten Faltung aus der Vielzahl von untergliederten Faltungen vorausgeht, Laden der Teilmenge von Parameterwerten in den geschützten Speicherbereich.

8. Verfahren nach Anspruch 4, wobei das Ausführen der Integritätsprüfung an der Teilmenge von Parameterwerten in der TEE das Ausführen der Integritätsprüfung an der Teilmenge von Parameterwerten in der TEE parallel zum Folgenden umfasst:

    Ausführen einer untergliederten Faltung, die der vorgegebenen untergliederten Faltung aus der Vielzahl von untergliederten Faltungen vorausgeht, und Laden einer weiteren Teilmenge von Parameterwerten in den geschützten Speicherbereich, wobei eine untergliederte Faltung, die auf die vorgegebene untergliederte Faltung aus der Vielzahl von untergliederten Faltungen folgt, mit der weiteren Teilmenge von Parameterwerten ausgeführt wird.

9. Elektronische Vorrichtung (101), umfassend:

    einen Prozessor (110); und einen mit dem Prozessor (110) gekoppelten Speicher (120), auf dem Anweisungen gespeichert sind, die, wenn vom Prozessor (110) ausgeführt, die Vorrichtung zum Ausführen von Vorgängen veranlassen zum: als Reaktion darauf, dass eine Faltung in einer Faltungsschicht (222) eines Deep-Learning-Modells (220) ausgelöst wird, Ausführen, basierend auf einer Eingabe und einer Menge von Parameterwerten (202) der Faltungsschicht (222), einer Vielzahl von untergliederten Faltungen sequentiell in einer Trusted Execution Environment (TEE) (210) einer Computervorrichtung (101), wobei die Vielzahl von untergliederten Faltungen mit verschiedenen Teilmengen von Parameterwerten ausgeführt wird, die aus der Menge von Parameterwerten (202) aufgeteilt sind, wobei die Ausführung einer vorgegebenen der Vielzahl von untergliederten Faltungen umfasst:

Speichern eines Eingabeabschnitts der durch eine Teilmenge von Parameterwerten für die vorgegebene untergliederte Faltung zu verarbeitenden Eingabe in einem geschützten Speicherbereich (212) in der TEE (210), wobei der Eingabeabschnitt als eine Matrix dargestellt wird,

Bestimmen eines Ergebnisses der vorgegebenen untergliederten Faltung durch eine einzelne Matrixmultiplikationsoperation auf dem Eingabeabschnitt und der Teilmenge von Parameterwerten für die vorgegebene untergliederte Faltung, wobei die Teilmenge von Parameterwerten als eine Matrix dargestellt wird, und Entfernen des Eingabeabschnitts aus dem geschützten Speicherbereich (212); und

Bestimmen eines Ergebnisses der Faltung als eine Ausgabe der Faltungsschicht (222) durch Kombinieren von Ergebnissen der Vielzahl von untergliederten Faltungen,

wobei das Speichern des Eingabeabschnitts im geschützten Speicherbereich (212) das Umwandeln der Eingabe in eine Eingabematrix basierend auf einer Größe der Menge von Parameterwerten (202) und einer Größe der Eingabe, so dass Elemente in einer Zeile oder Spalte der Eingabematrix sequentiell mit entsprechenden Parameterwerten in der Menge von Parameterwerten (202) in der Faltung zu multiplizieren sind, umfasst;

Bestimmen eines Eingabeabschnitts entsprechend der Teilmenge von Parameterwerten aus der Eingabematrix basierend auf der Zahl der Vielzahl von untergliederten Faltungen und einer Rangfolge der vorgegebenen Faltung aus der Vielzahl von untergliederten Faltungen; und

Speichern des bestimmten Eingabeabschnitts im geschützten Speicherbereich (212).

10. Vorrichtung (101) nach Anspruch 9, wobei die Zahl der Vielzahl von untergliederten Faltungen basierend auf einer verfügbaren Speichergröße des geschützten Speicherbereichs (212) bestimmt wird.

11. Vorrichtung (101) nach Anspruch 9, wobei die Menge von Parameterwerten (202) in einem Speicherbereich außerhalb der TEE (210) gespeichert wird, wobei die Vorgänge ferner umfassen:
als Reaktion auf das Bestimmen, dass die vorgegebene untergliederte Faltung ausgeführt werden soll, Laden der Teilmenge von Parameterwerten aus dem Speicherbereich außerhalb der TEE (210) in den geschützten Speicherbereich (212).

12. Vorrichtung (101) nach Anspruch 11, wobei das Laden der Teilmenge von Parameterwerten (202) in den geschützten Speicherbereich (212) ferner umfasst:
Ausführen einer Integritätsprüfung an der Teilmenge von Parameterwerten in der TEE (210), umfassend:

Berechnen eines Integritätsprüfwertes für die Teilmenge von Parameterwerten,

Vergleichen des berechneten Integritätsprüfwertes mit einem erwarteten Integritätsprüfwert, der im geschützten Speicherbereich (212) gespeichert ist, und als Reaktion auf die Übereinstimmung des berechneten Integritätsprüfungswertes mit dem erwarteten Integritätsprüfungswert, Bestätigen der Integrität der Teilmenge von Parameterwerten; und als Reaktion auf das Bestätigen der Integrität der Teilmenge von Parameterwerten, Speichern der Teilmenge von Parameterwerten in den geschützten Speicherbereich (212).

13. Computerprogrammprodukt, das physisch auf dem Computerspeichermedium gespeichert ist und maschinenausführbare Anweisungen umfasst, die, wenn von einer Vorrichtung ausgeführt, die Vorrichtung zum Ausführen des Verfahrens nach einem der Ansprüche 1-8 veranlassen.

**Revendications**

1. Procédé implémenté par un ordinateur, comprenant :

en réponse au déclenchement d'une convolution dans une couche convolutionnelle (222) d'un modèle d'apprentissage profond (220), l'exécution, sur la base d'une entrée et d'un ensemble de valeurs de paramètres (202) de la couche convolutionnelle, d'une pluralité de convolutions partitionnées séquentiellement dans un environnement d'exécution de confiance TEE (210), soit Trusted Execution Environment, d'un dispositif informatique (101), la pluralité de convolutions partitionnées étant exécutée avec différents sous-ensembles de valeurs de paramètres divisés à partir de l'ensemble de valeurs de paramètres, l'exécution d'une convolution donnée de la pluralité de convolutions partitionnées comprenant :

le stockage, dans une zone de mémoire protégée (212) dans le TEE, d'une portion d'entrée de l'entrée à traiter par un sous-ensemble de valeurs de paramètres pour la convolution partitionnée donnée, la portion d'entrée étant représentée sous forme d'une matrice,

la détermination d'un résultat de la convolution partitionnée donnée par une seule opération de multiplication de matrice sur la portion d'entrée et le sous-ensemble de valeurs de paramètres pour la convolution partitionnée donnée, le sous-ensemble de valeurs de paramètres étant représenté sous forme d'une matrice, et

la suppression de la portion d'entrée dans la zone de mémoire protégée ; et

la détermination d'un résultat de la convolution en tant que sortie de la couche convolutionnelle en combinant les résultats de la pluralité de convolutions partitionnées,

dans lequel le stockage de la portion d'entrée dans la zone de mémoire protégée comprend :

la conversion de l'entrée en une matrice d'entrée sur la base de la taille de l'ensemble de valeurs de paramètres et de la taille de l'entrée, de telle sorte que les éléments d'une ligne ou d'une colonne de la matrice d'entrée doivent être multipliés séquentiellement par les valeurs de paramètres respectives dans l'ensemble de valeurs de paramètres dans la convolution ;

la détermination d'une portion d'entrée correspondant au sous-ensemble de valeurs de paramètres provenant de la matrice d'entrée sur la base du nombre de convolutions de la pluralité de convolutions partitionnées et du classement de la convolution donnée parmi la pluralité de convolutions partitionnées ; et

le stockage de la portion d'entrée déterminée dans la zone de mémoire protégée.

2. Procédé selon la revendication 1, dans lequel le nombre de convolutions de la pluralité de convolutions partitionnées est déterminé sur la base de la taille de stockage disponible de la zone de mémoire protégée.

3. Procédé selon la revendication 1, dans lequel l'ensemble de valeurs de paramètres est stocké dans une zone de mémoire à l'extérieur du TEE, le procédé comprenant en outre :
en réponse à la détermination du fait que la convolution partitionnée donnée doit être exécutée, le chargement du sous-ensemble de valeurs de paramètres de la zone de mémoire à l'extérieur du TEE dans la zone de mémoire protégée.

4. Procédé selon la revendication 3, dans lequel le chargement du sous-ensemble de valeurs de paramètres dans la zone de mémoire protégée comprend en outre :

la mise en œuvre d'un contrôle d'intégrité sur le sous-ensemble de valeurs de paramètres dans le TEE, comprenant :

le calcul d'une valeur de contrôle d'intégrité du sous-ensemble de valeurs de paramètres,

la comparaison de la valeur de contrôle d'intégrité calculée à une valeur de contrôle d'intégrité attendue stockée dans la zone de mémoire protégée, et

en réponse au fait que la valeur de contrôle d'intégrité calculée corresponde à la valeur de contrôle d'intégrité attendue, la confirmation de l'intégrité du sous-ensemble de valeurs de paramètres ; et

en réponse à la confirmation de l'intégrité du sous-ensemble de valeurs de paramètres, le stockage du sous-ensemble de valeurs de paramètres dans la zone de mémoire protégée.

5. Procédé selon la revendication 4, comprenant en outre :
après avoir déterminé le résultat de la convolution partitionnée donnée, la suppression du sous-ensemble de valeurs de paramètres de la zone de mémoire protégée.

6. Procédé selon la revendication 4, dans lequel le calcul de la valeur de contrôle d'intégrité du sous-ensemble de valeurs de paramètres comprend :
la détermination de la valeur de contrôle d'intégrité en mettant en œuvre une opération de hachage sur le sous-ensemble de valeurs de paramètres.

7. Procédé selon la revendication 3, dans lequel le chargement du sous-ensemble de valeurs de paramètres dans la zone de mémoire protégée comprend :

parallèlement à l'exécution d'une convolution partitionnée précédant la convolution partitionnée donnée parmi la pluralité de convolutions partitionnées, le chargement du sous-ensemble de valeurs de paramètres dans la zone de mémoire protégée.

8. Procédé selon la revendication 4, dans lequel la mise en œuvre du contrôle d'intégrité sur le sous-ensemble de valeurs de paramètres dans le TEE comprend la mise en œuvre du contrôle d'intégrité sur le sous-ensemble de valeurs de paramètres dans le TEE parallèlement aux opérations suivantes :

exécution d'une convolution partitionnée précédant la convolution partitionnée donnée parmi la pluralité de convolutions partitionnées, et

chargement d'un sous-ensemble de valeurs de paramètres additionnel dans la zone de mémoire protégée, une convolution partitionnée suivant la convolution partitionnée donnée parmi la pluralité de convolutions partitionnées étant exécutée avec le sous-ensemble de valeurs de paramètres additionnel.

9. Dispositif électronique (101), comprenant :

un processeur (110) ; et
une mémoire (120) couplée au processeur (110) et dans laquelle sont stockées des instructions qui, quand elles sont exécutées par le processeur (110), commandent au dispositif de mettre en œuvre les actions suivantes :

en réponse au déclenchement d'une convolution dans une couche convolutionnelle (222) d'un modèle d'apprentissage profond (220), exécution, sur la base d'une entrée et d'un ensemble de valeurs de paramètres (202) de la couche convolutionnelle (222), d'une pluralité de convolutions partitionnées séquentiellement dans un environnement d'exécution de confiance TEE (210) d'un dispositif informatique (101), la pluralité de convolutions partitionnées étant exécutée avec différents sous-ensembles de valeurs de paramètres divisés à partir de l'ensemble de valeurs de paramètres (202), l'exécution d'une convolution donnée de la pluralité de convolutions partitionnées comprenant :

le stockage, dans une zone de mémoire protégée (212) dans le TEE (210), d'une portion d'entrée de l'entrée à traiter par un sous-ensemble de valeurs de paramètres pour la convolution partitionnée donnée, la portion d'entrée étant représentée sous forme d'une matrice,
la détermination d'un résultat de la convolution partitionnée donnée par une seule opération de multiplication de matrice sur la portion d'entrée et le sous-ensemble de valeurs de paramètres pour la convolution partitionnée donnée, le sous-ensemble de valeurs de paramètres étant représenté sous forme d'une matrice, et
la suppression de la portion d'entrée dans la zone de mémoire protégée (212) ; et

détermination d'un résultat de la convolution en tant que sortie de la couche convolutionnelle (222) en combinant les résultats de la pluralité de convolutions partitionnées,
dans lequel le stockage de la portion d'entrée dans la zone de mémoire protégée (212) comprend :

la conversion de l'entrée en une matrice d'entrée sur la base de la taille de l'ensemble de valeurs de paramètres (202) et de la taille de l'entrée, de telle sorte que les éléments d'une ligne ou d'une colonne de la matrice d'entrée doivent être multipliés séquentiellement par des valeurs de paramètres respectives de l'ensemble de valeurs de paramètres (202) dans la convolution ;
la détermination d'une portion d'entrée correspondant au sous-ensemble de valeurs de paramètres provenant de la matrice d'entrée sur la base du nombre de convolutions de la pluralité de convolutions partitionnées et du classement de la convolution donnée parmi la pluralité de convolutions partitionnées ; et
le stockage de la portion d'entrée déterminée dans la zone de mémoire protégée (212).

10. Dispositif (101) selon la revendication 9, dans lequel le nombre de convolutions de la pluralité de convolutions partitionnées est déterminé sur la base de la taille de stockage disponible de la zone de mémoire protégée (212).

**11.** Dispositif (101) selon la revendication 9, dans lequel l'ensemble de valeurs de paramètres (202) est stocké dans une zone de mémoire à l'extérieur du TEE (210), les actions comprenant en outre :
en réponse à la détermination du fait que la convolution partitionnée donnée doit être exécutée, le chargement du sous-ensemble de valeurs de paramètres de la zone de mémoire à l'extérieur du TEE (210) dans la zone de mémoire protégée (212).

**12.** Dispositif (101) selon la revendication 11, dans lequel le chargement du sous-ensemble de valeurs de paramètres (202) dans la zone de mémoire protégée (212) comprend en outre :

la mise en œuvre d'un contrôle d'intégrité sur le sous-ensemble de valeurs de paramètres dans le TEE (210), comprenant :

le calcul d'une valeur de contrôle d'intégrité du sous-ensemble de valeurs de paramètres,
la comparaison de la valeur de contrôle d'intégrité calculée à une valeur de contrôle d'intégrité attendue stockée dans la zone de mémoire protégée (212), et
en réponse au fait que la valeur de contrôle d'intégrité calculée corresponde à la valeur de contrôle d'intégrité attendue, la confirmation de l'intégrité du sous-ensemble de valeurs de paramètres ; et

en réponse à la confirmation de l'intégrité du sous-ensemble de valeurs de paramètres, le stockage du sous-ensemble de valeurs de paramètres dans la zone de mémoire protégée (212).

**13.** Produit logiciel stocké de manière tangible sur un support de stockage informatique et comportant des instructions exécutables par une machine qui, quand elles sont exécutées par un dispositif, commandent au dispositif de mettre en œuvre le procédé selon l'une quelconque des revendications 1 à 8.

**FIG. 1**

FIG. 2

**FIG. 3A**

**FIG. 3B**

**FIG. 4**

101

200

TEE _____ 214

MODEL
EXECUTOR

PARAMETER
CHECKER 510

212

PROTECTED
MEMORY
AREA

502

| CHECK VALUE 0 |
| CHECK VALUE 1 |
| ...... |
| CHECK VALUE N |

210

202

PARAMETER
VALUES OF
MODEL 220

PARAMETER
LOADER 216

174 172

**FIG. 5**

THREAD OF PARAMETER
LOADER 216

| 1 | 2 | 3 | . . . |

THREAD OF PARAMETER
CHECKER 510

| 1 | 2 | 3 | . . . |

THREAD OF MODEL
EXECUTOR 214

| 1 | 2 | 3 | . . . |

TIME

**FIG. 6**

700 ⟋

710 CONVOLUTION OF CONVOLUTIONAL LAYER IS TRIGGERED?

YES

720 ANY PARTITIONED CONVOLUTION TO BE EXECUTED?          NO

YES

730 STORE, INTO A PROTECTED MEMORY AREA IN THE TEE, AN INPUT PORTION OF THE INPUT TO BE PROCESSED BY A SUBSET OF PARAMETER VALUES FOR THE GIVEN PARTITIONED CONVOLUTION

740 DETERMINE A RESULT OF GIVEN PARTITIONED CONVOLUTION THROUGH A SINGLE MATRIX MULTIPLICATION OPERATION ON THE INPUT PORTION AND THE SUBSET OF PARAMETER VALUES FOR GIVEN PARTITIONED CONVOLUTION

750 REMOVE THE INPUT PORTION FROM THE PROTECTED MEMORY AREA

760 DETERMINE A RESULT OF THE CONVOLUTION BY COMBINING RESULTS OF THE PLURALITY OF PARTITIONED CONVOLUTIONS

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GU et al.** Securing Input Data of Deep Learning Inference Systems via Partitioned Enclave Execution. *arXiv:1807.00969v1*, 03 July 2018

- **ANDERSON et al.** Low-Memory GEMM-Based Convolution Algorithms for Deep Neural Networks. *arXiv:1709.03395*, 08 September 2017